# EUROPEAN PATENT SPECIFICATION

(11) **EP 4 318 231 B1**
(45) Date of publication and mention of the grant of the patent: **15.07.2026**
(21) Application number: 21939136.4
(22) Date of filing: 30.12.2021
(51) Int. Cl.: H04L 41/0806, H04L 67/306, G06F 8/60, G06F 9/50, G06F 16/73, H04L 67/00

(54) **METHOD, SYSTEM AND APPARATUS FOR DEPLOYING SOLUTION, AND SERVER**
VERFAHREN, SYSTEM UND VORRICHTUNG ZUM EINSETZEN EINER LÖSUNG UND SERVER
PROCÉDÉ, SYSTÈME ET APPAREIL POUR DÉPLOYER UNE SOLUTION, ET SERVEUR

(30) Priority: 30.04.2021 CN 202110078519
(43) Date of publication of application: 07.02.2024
(60) Divisional application: 26184425.2
(73) Proprietor: Huawei Cloud Computing Technologies Co., Ltd., Guizhou 550025 (CN)
(72) Inventor: WU, Qiangwei, Shenzhen Guangdong 518129 (CN)
(74) Representative: MERH-IP Matias Erny Reichl Hoffmann Patentanwälte PartG mbB
(86) International application number: PCT/CN2021/143377
(87) International publication number: WO 2022/227677

(56) References cited:
- CN-A- 102 207 859
- CN-A- 103 885 969
- CN-A- 107 220 120
- CN-A- 112 035 396
- US-A1- 2006 230 389
- US-A1- 2020 067 796

## Description

### TECHNICAL FIELD

The present invention relates to the field of computer technologies, and in particular, to a method, a system, and an apparatus for deploying a solution, a server, a computer-readable storage medium, and a computer program product on a cloud computing platform.

### BACKGROUND

Mainstream product documents or manuals on the Internet are provided for users in a manner such as text and charts. The users need to browse the documents or the manuals based on requirements, without complete guidance. The product documents are professional in language and rich in content, which makes it difficult for the users to read and identify useful information. In addition, although the users know their requirements, the users may not be able to establish correspondences between their requirements and product functions. The users need to have professional knowledge and technical background and read the product manuals to determine required services, such as a product and a solution.

A cloud computing platform provides a product and a solution. The solution is based on a combination of several products to work together. Therefore, product combination configuration of the solution is complex and professional. Manual configuration of the solution is error-prone and inefficient.

US 2020/067796 A1 discloses a managing service deployment.

### SUMMARY

This application provides a method, an apparatus, and a system for deploying a solution, a server, a computer program product, and a non-volatile storage medium, to resolve a problem of low efficiency when a solution is manually deployed on a cloud computing platform, and the solution is defined by claims.

According to a first aspect, this application provides a method for deploying a solution. The method includes: receiving a service request of a user; and obtaining a script of a target solution, where the target solution includes a plurality of products, and a combination of the plurality of products satisfies the service request.

In this method, a server on a cloud computing platform can invoke the script of the target solution only when a user raises a requirement, to automatically deploy a cloud service corresponding to the foregoing solution (or product) for the user, thereby resolving a problem that manual deployment is time-consuming, labor-intensive, and error-prone.

In a possible design of the first aspect, the script includes a plurality of default parameters for configuring the target solution.

The default parameter herein usually includes a necessary parameter used to deploy the cloud service, and the target solution may be deployed for the user on the cloud computing platform without user intervention.

The plurality of default parameters include: a topology parameter, used to configure the plurality of products included in the solution; and a product parameter, used to configure the plurality of products included in the solution.

In a possible design of the first aspect, before the deploying, on a cloud computing platform, the target solution for the user by using the script, the method further includes: generating, based on the service request, one or more service parameters used to configure the target solution; and updating a corresponding default parameter in the script by using the generated service parameter.

The default parameter may be modified based on the service parameter generated based on the service requirement, so as to provide a solution that is more suitable for the service of the user.

In a possible design of the first aspect, before the deploying, on a cloud computing platform, the target solution for the user by using the script, the method further includes: sending a configuration of the target solution included in the script to a terminal; and receiving an acknowledgment for the configuration from the terminal.

Before deploying a solution, the user can confirm the content of the current solution on the terminal and determine whether to deploy the current solution based on the actual situation.

In a possible design of the first aspect, before the deploying, on a cloud computing platform, the target solution for the user by using the script, the method further includes: sending a configuration of the target solution included in the script to a terminal; receiving a modified configuration parameter sent by the terminal; and updating a corresponding service parameter or a corresponding default parameter in the script by using the modified configuration parameter.

This method provides a more user-friendly deployment mode by providing the user with an opportunity to intervene in modification.

In a possible design of the first aspect, a solution matching a keyword of the service request is determined as the target solution.

In a possible design of the first aspect, before the obtaining a script of a target solution, the method further includes: sending one or more alternative solution templates matching the service request to the terminal, and receiving an identifier of a target solution template selected by the terminal, where the target solution template is used to describe the target solution, and the one or more alternative solution templates include the target solution template; and
the obtaining a script of a target solution is specifically: obtaining a script associated with the target solution template.

In practice, the service requirement of the user and the solution (or the product) are usually "fuzzy" correspondences, and "fuzzy" indicates that the user does not know a specific solution (or product) corresponding to the requirement of the user. This embodiment may help the user to map the requirement to a video file that is easy to understand, thereby saving or shortening processes such as searching for a document, reading a product manual, and viewing a technical document or another media document, and providing a more shortcut for the user to locate a solution (or product) that meets the requirement. The server on the cloud computing platform automatically deploys the cloud service corresponding to the foregoing solution (or product) for the user, thereby resolving a problem that manual deployment is time-consuming, labor-intensive, and error-prone.

In a possible design of the first aspect, a matched solution template is obtained when the keyword of the service request matches a keyword of the solution template, where the matched solution template is the alternative solution template.

In a possible design of the first aspect, different alternative solution templates in the plurality of alternative solution templates are used to describe different solutions.

The user can select an alternative solution template corresponding to the solution that is suitable for the user based on judgment.

In a possible design of the first aspect, the alternative solution template is a video file or a solution document.

The video file or the solution document provides the user with a more understandable way to help the user make a better choice.

In a possible design of the first aspect, the receiving a service request of a user includes: receiving voice sent by the terminal; and
obtaining the service request of the user by using the voice.

Voice is more in line with current user usage habits and more convenient than typing.

In a possible design of the first aspect, a guide video or a guide document for using the target solution is sent to the terminal, where the guide video or the guide document is used to instruct how to use the deployed target solution.

According to a second aspect, this application provides an apparatus for deploying a solution. A plurality of function modules included in the apparatus are configured to implement different steps of the method provided in the first aspect or any possible design of the first aspect.

According to a third aspect, this application provides a server. The server includes a processor and a memory. The processor executes instructions stored in the memory, so that the server is enabled to perform the method provided in the first aspect or the possible designs of the first aspect.

This application provides a server. The server includes a processor and a memory. The processor executes instructions stored in the memory, so that the server is enabled to deploy the apparatus provided in the second aspect.

According to a fourth aspect, this application provides a system, including one or more servers, where the one or more servers deploy the apparatus provided in the second aspect.

According to a fourth aspect, this application provides a system, including a terminal and a server. The server is the server provided in the third aspect, and the terminal is configured to send the foregoing service request.

In a possible design of the fourth aspect, the terminal is further configured to: receive the configuration of the target solution included in the script sent by the server; and send an acknowledgment for the configuration.

In a possible design of the fourth aspect, the terminal is further configured to: receive the configuration of the target solution included in the script sent by the server; and send a modified configuration parameter.

In a possible design of the fourth aspect, the terminal is further configured to: send voice, where the voice includes the service request of the user.

According to a fifth aspect, this application provides a computer-readable storage medium. The computer-readable storage medium stores instructions. When a processor of a server executes the instructions, the server performs the method provided in the first aspect or the possible designs of the first aspect.

This application provides a computer-readable storage medium. The computer-readable storage medium stores instructions. When a processor of a server executes the instructions, the server implements the apparatus provided in the second aspect.

According to a sixth aspect, this application provides a computer program product, where the computer program product includes instructions, and the instructions are stored in a computer-readable storage medium. A processor of a server may read the instructions from the computer-readable storage medium, and the processor executes the instructions, so that the server is enabled to perform the method provided in the first aspect or the possible designs of the first aspect.

This application provides a computer program product. The computer program product includes instructions, and the instructions are stored in a computer-readable storage medium. A processor of a server may read the instructions from the computer-readable storage medium. The processor executes the instructions, and the server implements the apparatus provided in the second aspect.

### BRIEF DESCRIPTION OF DRAWINGS

FIG. 1 is a diagram of an example of a scenario according to an embodiment of this application;
FIG. 2 is a schematic diagram of providing a product or a solution on a cloud computing platform according to an embodiment of this application;
FIG. 3 is a schematic diagram of an example of a cloud computing platform according to an embodiment of this application;
FIG. 4 is a schematic diagram of an example of a cloud computing platform deployment apparatus according to an embodiment of this application;
FIG. 5 is a schematic diagram of an example of a cloud computing platform according to an embodiment of this application;
FIG. 6 is a schematic diagram of an example of a database structure according to an embodiment of this application;
FIG. 7 is a schematic diagram of an example of a method procedure according to an embodiment of this application;
FIG. 8 is a schematic diagram of an example of a method procedure according to an embodiment of this application;
FIG. 9 is a schematic diagram of an example of a user interface according to an embodiment of this application;
FIG. 10 is a schematic diagram of an example according to an embodiment of this application;
FIG. 11 is a schematic diagram of an example of a user interface according to an embodiment of this application;
FIG. 12 is a schematic diagram of an example of a user interface according to an embodiment of this application;
FIG. 13 is a schematic diagram of an example of a method according to an embodiment of this application;
FIG. 14 is a schematic diagram of an example of a solution parameter according to an embodiment of this application;
FIG. 15 is a schematic diagram of an example of a user interface according to an embodiment of this application;
FIG. 16 is a schematic diagram of an example of a user interface according to an embodiment of this application;
FIG. 17 is a schematic diagram of an example of an apparatus 108 according to an embodiment of this application; and
FIG. 18 is a schematic structural diagram of an example of a server 102 according to an embodiment of this application.

### DESCRIPTION OF EMBODIMENTS

The following describes the technical solutions in this embodiment of this application with reference to the accompanying drawings in embodiments of this application.

For ease of understanding embodiments of this application, some terms in this application are first described by using examples.

Cloud computing platform: A cloud computing platform carries a product and a solution by using a server, and provides the product and the solution to a user. For example, the cloud computing platform provides a page related to the cloud computing platform, so that the user can remotely deploy the product and the solution.

Product: A product refers to software deployed on the cloud computing platform, and provides a service for the user by using the software. The cloud computing platform provides various products, and each product has its own functions. For example, the product may include a cloud server, a cloud container, cloud storage, a data cloud library service, a public Internet Protocol (internet protocol, IP) address, a load balancing service, a domain name registration, a cloud firewall, and the like.

Solution: A solution refers to a product combination that is built to support the industry or a service scenario. For example, to support a cloud game service scenario, a cloud game platform is built using a product combination of an instance, cloud storage, a cloud database, a public IP, a load balancing service, and a firewall.

Script: A script is executed on the cloud computing platform to deploy the product or the solution. The script may be an executable program.

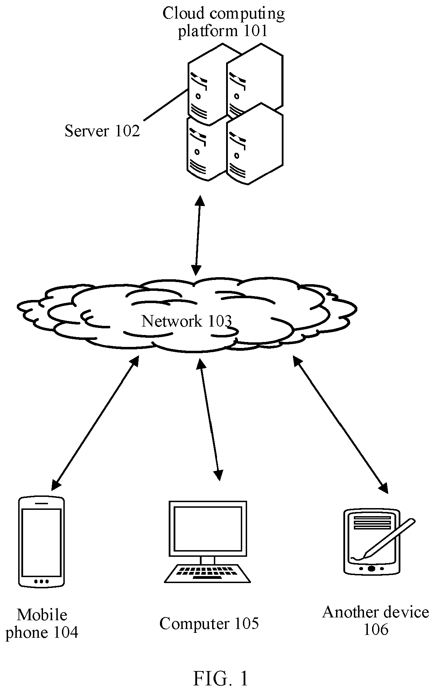

FIG. 1 is a diagram of an example of a network scenario according to an embodiment of this application.

In FIG. 1, a cloud computing platform 101 includes a plurality of servers 102. The cloud computing platform 101 may provide a product or a solution for a user based on the plurality of servers 102. For example, as shown in FIG. 1, the cloud computing platform 101 is deployed on the plurality of servers 102. The cloud computing platform 101 may virtualize resources (for example, processors and memories) of the plurality of servers 102, and deploy, on the virtualized resources, the product or the solution provided for the user.

The plurality of servers 102 configured to support the cloud computing platform 101 may come from a same cluster or different clusters, or may come from a same data center or different data centers. Sources and geographical locations of the plurality of servers 102 are not limited in this application.

The server 102 may be a rack server or a blade server. A specific form of the server is not limited in this application.

In FIG. 1, a network 103 may be a public network such as the Internet, or a hybrid network in which a public network and a private network coexist, or another communication network that can implement data transmission. In the network 130, one or more of the following protocols may be used to implement data transmission, for example, the Transmission Control Protocol/Internet Protocol (TCP/IP), the User Datagram Protocol (UDP), and another type of protocol. From a technical perspective, the network 130 may include a wired network and a wireless network, such as a wired network, a Wi-Fi network, a mobile communication network (for example, 3G, 4G, and 5G), a wide area network, a local area network, and other networks, and various combinations thereof. In addition, the network 103 may further include a hardware infrastructure device that supports the network, for example, a switch, a gateway, an access point, a firewall, a router, a base station, or a wireless access point (WAP).

In FIG. 1, a mobile phone 104, a computer 105, and another device 106 may communicate with the server 102 through the network 103, to access the cloud computing platform 101.

For example, a manner of accessing the cloud computing platform 101 is provided. Software of a client of the cloud computing platform 101 is installed on the mobile phone 104, the computer 105, and the device 106, and the cloud computing platform 101 is accessed by using the client. In this application, a device (for example, the computer 105) on which the client for accessing the cloud computing platform 101 is deployed may access the cloud computing platform 101 through the network 103, for example, by using a product or a solution provided by the cloud computing platform 101 by using the server 102.

For another example, a manner of accessing the cloud computing platform 101 is provided. The mobile phone 104, the computer 105, and the device 106 directly access, by using a browser, a web page provided by the cloud computing platform 101, and deploy, by using the web page, a product or a solution provided by the cloud computing platform 101.

In FIG. 1, the device 106 may be any terminal device such as a tablet or a digital assistant.

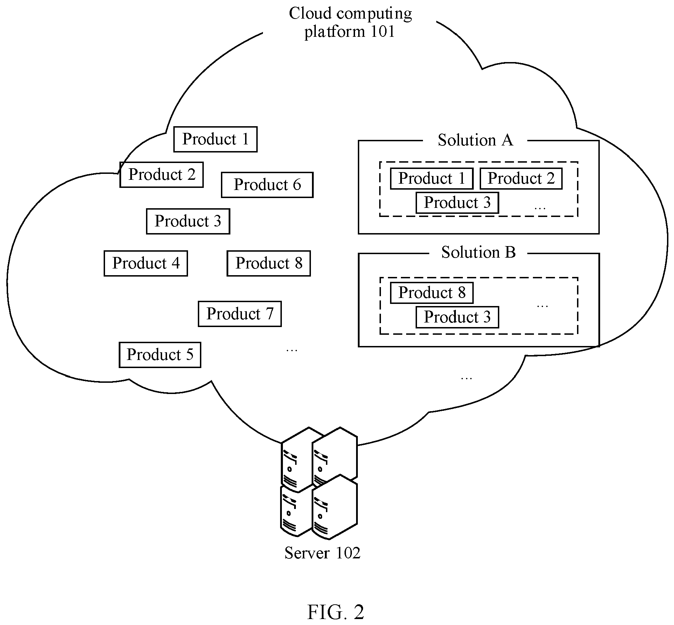

FIG. 2 is a diagram of an example of providing a product or a solution on a cloud computing platform 101 according to an embodiment of this application.

As shown in FIG. 2, the cloud computing platform 101 may provide a plurality of products, for example, a product 1 to a product 8, based on the server 102.

As shown in FIG. 2, the cloud computing platform 101 may provide a plurality of solutions based on the server 102, for example, a solution A including a product 1 to a product 3, for example, a solution B including a product 3 and a product 8. It should be noted that although a solution includes a plurality of products, the combined products need to work together to complete a solution for a specific service scenario. Generally, the product combinations of solutions vary for different service scenarios. The product combinations and topologies of solutions are different. Even if the product combination topologies of solutions are the same, the parameter settings of products in the solutions are different.

For example, a small-scale service solution may include products such as an instance (a cloud server), a cloud disk, a load balancing service, an elastic public IP, and a virtual private cloud. When establishing the solution, the user needs to set product parameters and topology parameters between the products.

The product parameter may be a product configuration such as a processor specification, an image type, and a system disk size of the cloud server. The topology parameters include a quantity of products and a product association relationship. The product association relationship refers to the relationship between the data flow ingress and the data flow egress of two or more products, for example, a network relationship between two servers is configured.

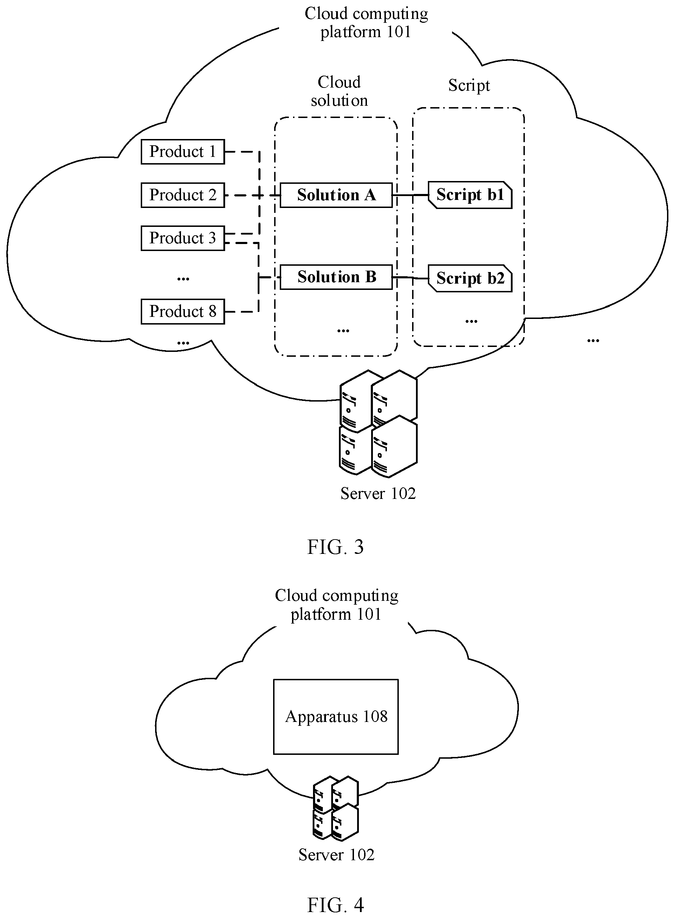

A conventional cloud computing platform 101 provides the product or the solution shown in FIG. 2. As shown in FIG. 3, FIG. 4, and FIG. 5, the cloud computing platform 101 in this application additionally provides the following:

In FIG. 3, the cloud computing platform 101 further provides a script (for example, a script b1 and a script b2). Each solution corresponds to one script, and the script is used to deploy the solution on the cloud computing platform. For example, the server 102 may execute the script b1 to establish a solution A corresponding to the server on the cloud computing platform. For a relationship between the solution A and a product, refer to descriptions corresponding to FIG. 2.

In FIG. 4, an apparatus 108 is further deployed in the cloud computing platform 101. The apparatus may include one or more modules (not shown in the figure), and may be configured to program an automatic deployment solution on the cloud computing platform. For example, the apparatus 108 may run the script to implement an automatic deployment solution. For another example, the apparatus may analyze a service request, and find a solution that meets the service request and a corresponding script.

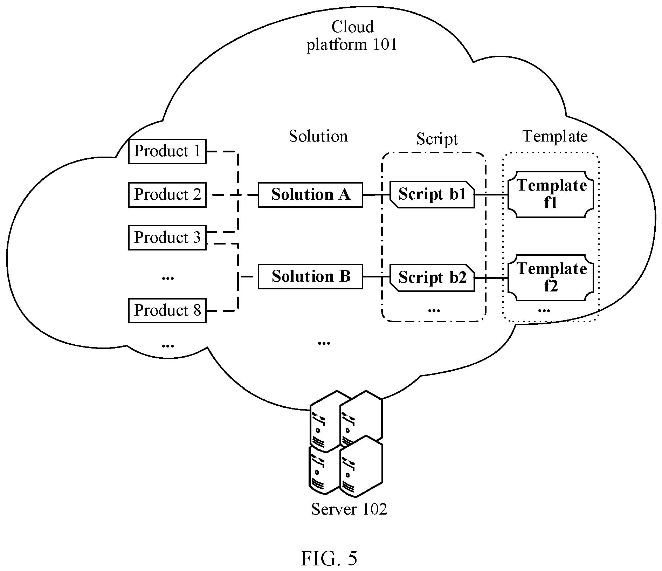

In FIG. 5, the cloud computing platform 101 may further include a template. A template f1 is used to describe a solution. There is an association relationship between the template and the script. A user may select a target template, and instruct the server 102 to execute a script corresponding to the target template, to complete solution deployment. For example, the template f1 corresponds to a script b1, and a template f2 corresponds to a script b2. In a possible embodiment, the template may be a video or a document. When watching a video document, the user may select a video or a document on an interface of a terminal. After receiving a selecting instruction, the server triggers execution of a corresponding script, to establish a solution corresponding to the video or the document on the cloud computing platform 101.

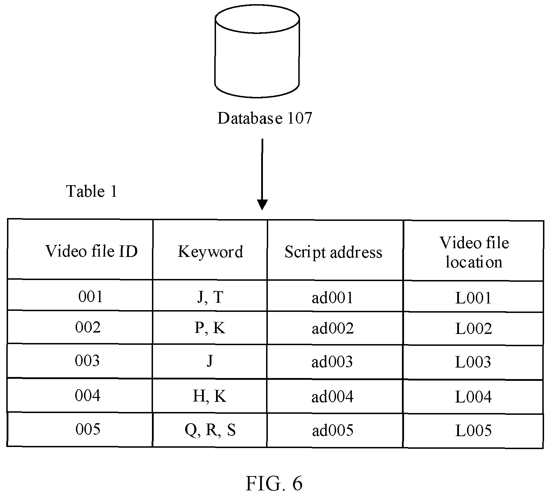

When the template in FIG. 5 is a video, FIG. 6 is a schematic diagram of an example structure of a database 107 according to an embodiment of this application. In a possible embodiment, one record in the database 107 includes at least the following four elements: a video ID, a keyword, a script address, and a video file location. Details are described as follows:
(1) The video file ID is a unique identifier of each video file, and is used to identify different video files. "001" and "002" in the figure are merely examples, and may be formed by any character in practice.
(2) The keyword is one or more words (or phrases) used to summarize content of a video file. After analysis and processing, the cloud computing platform 101 performs retrieval and matching with a keyword of a video file in the video file database 107 based on a requirement (text or voice) input by a user, and selects one or more video files closest to the user requirement.
(3) The script address refers to a network location of a script file corresponding to the script (for example, the script a1 and the script b1) in FIG. 3 and FIG. 5, for example, represented by a uniform resource locator (URL). These script files may be stored on the cloud computing platform 101, to facilitate script execution and establishment of the product and the solution in embodiments of this application.
(4) The video file location refers to the location where the video file is stored on the Internet. It can be learned from the foregoing that the video file is stored in the video file database 107. Refer to the foregoing description of deployment of the video file database 107.

As shown in Table 1 in FIG. 6, the first row records are a video ID "001", keywords "J" and "T", a script address "ad001", and a video file address "L001". The first row records mean that a video file having the video ID "001" may be matched through the keyword "J" or "T", and then the video file having the video ID "001" may be obtained by using the video file address "L001", and in addition, the script address "ad001" may be used to obtain a described solution for deploying this video file. For another example, the third row records are a video ID "003", a keyword "J", a script address "ad003", and a video file address "L003". The third row records mean that a video file having the video ID "003" may be matched through the keyword "J", and then the video file having the video ID "003" may be obtained by using the video file address "L003", and in addition, the script address "ad003" may be used to obtain a described solution for deploying this video file. In this way, each line records an association relationship between a video file, a script, and a keyword.

In addition, two video IDs may be matched by using the keyword "K", that is, two video files may be matched: a video file with a video ID "002" and a video file with a video ID "004". In this way, the user may select a video file most related to a requirement of the user, and the cloud computing platform 101 generates a configuration used to deploy a product or a solution described by the selected video file.

The content of the video file may be content used to describe a corresponding solution, for example, technical background, an application scenario, a product advantage, a product fee, a product configuration, a solution fee, a solution composition, a solution configuration, a construction process, a function feature, a finished product preview, and an associated configuration.

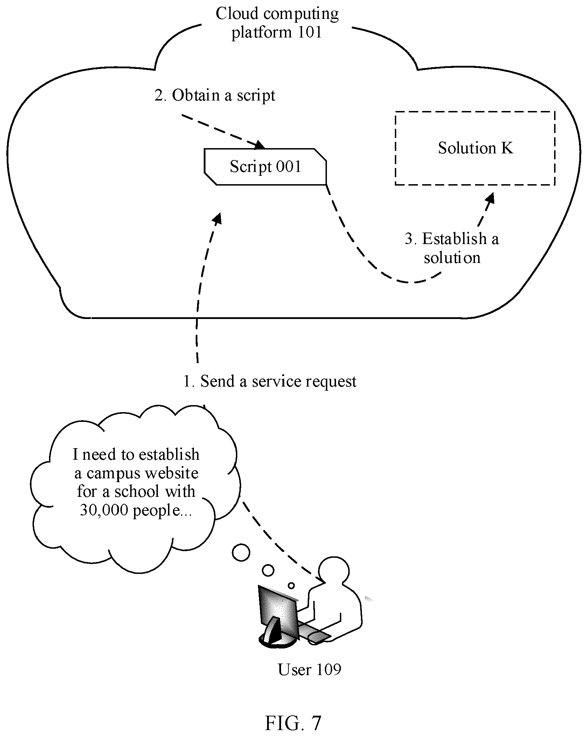

Based on the basic content described above, FIG. 7 is a schematic diagram of an example of a method procedure according to an embodiment of this application. FIG. 6 mainly includes a cloud computing platform 101, a user 109, and an interaction process between the cloud computing platform 101 and the user 109.

Step 1: A user raises a requirement, and cloud computing obtains a service request.

In a possible implementation, the user 109 inputs a requirement of the user 109 on the client device (for example, 104, 105, or 106) by using client application software or a web page. The requirement may be a requirement input in a manner such as voice or a text, and the requirement is a solution-level requirement. In a possible implementation, the terminal sends the service request carrying the requirement to the cloud computing platform.

For example, in an application scenario, the content described by the user may include one or more of the following: a service to be implemented, an effect to be achieved, a function to be implemented, a scenario to be used, an organization or group/individual to be used for, and the like. For example, in FIG. 7, a requirement of the user 109 is "I need to establish a campus website for a school with 30,000 people".

Step 2: Obtain a script for generating a solution.

After receiving the service request in the first step, the server obtains, by analyzing the service request, a script of a solution that can meet the service request. For example, the cloud computing platform in FIG. 7 obtains the script 001, which can meet a service requirement of a user for establishing a campus website. In a possible obtaining manner, a solution identifier may be matched by matching a keyword in a user requirement, and the script associated with the solution identifier is obtained. The obtaining manner is not limited herein.

Step 3: Establish the solution on a server.

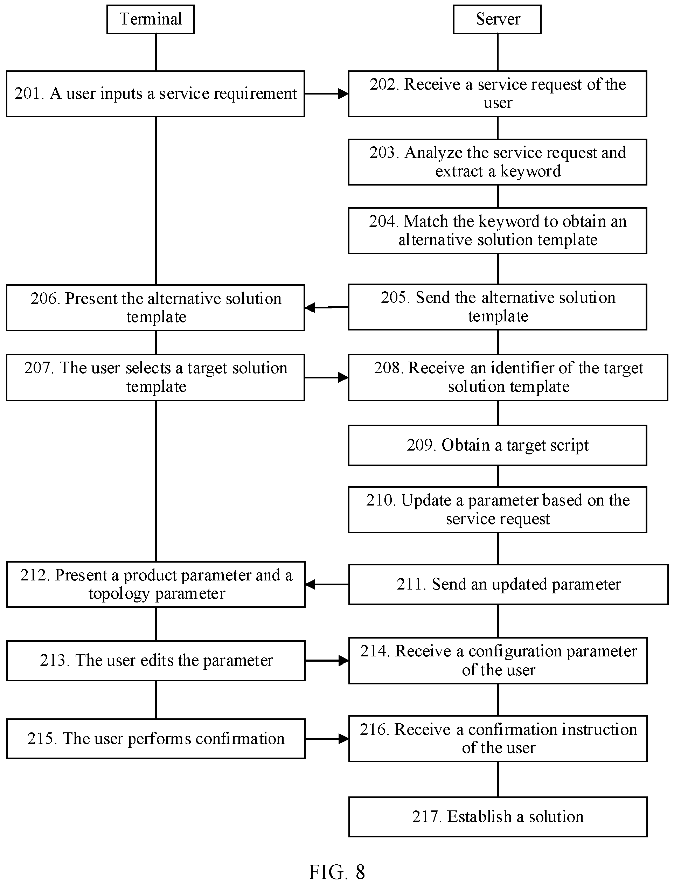

For example, in an implementation, a server on a cloud computing platform establishes a cloud solution based on a script, and the script includes a necessary default parameter used to configure the solution. Optionally, the server may further obtain a personalized service parameter based on requirement analysis, and the service parameter may be used to update a default parameter. Optionally, the server may further send configuration information of the solution to the user for confirmation, the user may further choose to modify the received configuration, and the server uses a parameter modified by the user as a parameter of the final solution. In a possible embodiment, the server updates the default parameter of the script 001 based on the parameter in the foregoing optional step, and then deploys and configures, by executing the script, the solution finally confirmed by the user. For a detailed implementation, refer to FIG. 8 and related descriptions.

Optionally, the server sends a guide video or a guide document to the user, to instruct the user to use a cloud service of a solution that has been deployed, for example, to teach the user how to log in to one of the servers.

FIG. 8 is a schematic diagram of an example of a method procedure further provided based on FIG. 7 according to an embodiment of this application. Step 201 to step 217 are included.

The following describes details of steps of the method procedure in this embodiment based on an example of an application scenario in which a user inputs a requirement through voice, a video file presents a result, and a "campus website" solution is established for the user.

Step 201: A user inputs a requirement on a terminal.

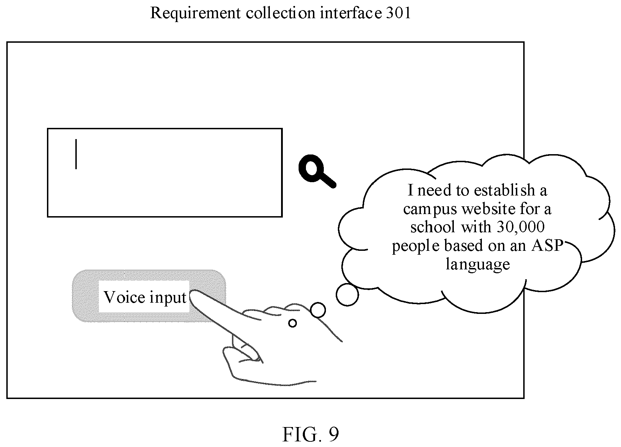

In a possible implementation, FIG. 9 shows a requirement collection interface 301 presented on a user terminal (for example, the terminal is a mobile phone). The interface 301 includes a text box in which a text can be input, and a search button component is located beside the text box. There is also an intelligent voice input button on the interface 301. A voice recording function of the terminal device may be triggered by long pressing or single clicking the button component.

Using voice input as an example, a user long presses a "voice input" button component on the interface 301, and starts to record voice "I need to establish a campus website for a school with 30,000 people based on an ASP language". After the voice recording is completed, voice information is automatically sent to the server 102. Optionally, after the voice recording is completed, the user may further properly modify, by using a preview interface of voice translation, a text paragraph or a word that is translated.

Step 202: A server receives a service request of the user.

In a possible implementation, the server obtains the service request that is sent by the terminal and that carries the user requirement. An obtaining manner is not limited herein.

Step 203: The server analyzes the service request and extracts a keyword.

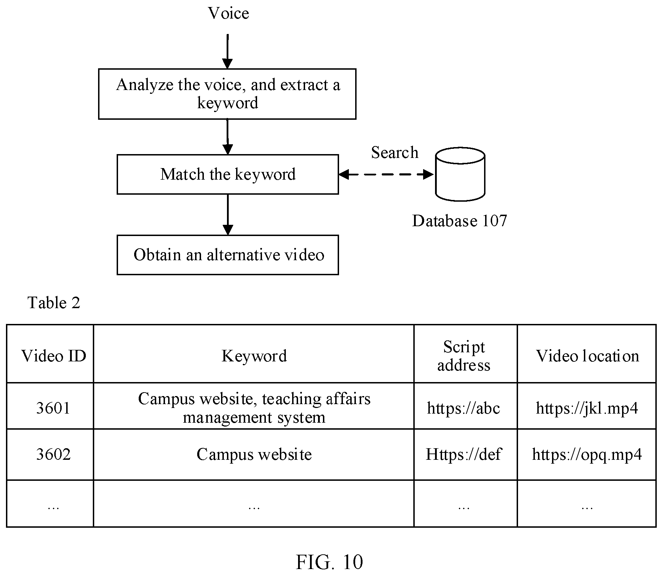

In an example of a scenario, referring to FIG. 10, after obtaining the service request in step 201, the server first performs voice analysis, and extracts, based on an analysis result, a keyword (for example, "campus website" in this example) related to the user requirement.

Step 204: The server matches the keyword to obtain an alternative solution template.

Then, continue to illustrate with an example after the steps in FIG. 10. After the keyword is extracted, search is performed in the database 107 in a keyword matching manner. One or more alternative solution templates are obtained based on a search result, and the templates are sent to the user terminal. In a possible implementation, the alternative solution template is a video file.

For example, in FIG. 10, the server obtains two video files whose video file IDs are "3601" and "3602" (there may be more video files, which are not completely shown in the figure). As shown in the table in FIG. 9, keywords of the first video file in the table are "campus website solution" and "establishing a teaching affairs management system", and keywords of the second video file in the table are "establishing a campus website". Both the two video files are about the "campus website" solution. Entry information of each video file further includes an address of an execution script for establishing a solution in the video file and an address of the video file.

Step 205: The server sends the alternative solution template.

The server sends the obtained one or more alternative solution templates to the terminal. For example, when the alternative solution template is a video, the server returns one or more video files to the terminal.

For example, this video can be used to introduce technical background, an application scenario, a product advantage, a product fee, a product configuration, a solution fee, a solution composition, a solution configuration, a construction process, a function feature, a finished product preview, and an associated configuration.

Step 206: The terminal presents the alternative solution template.

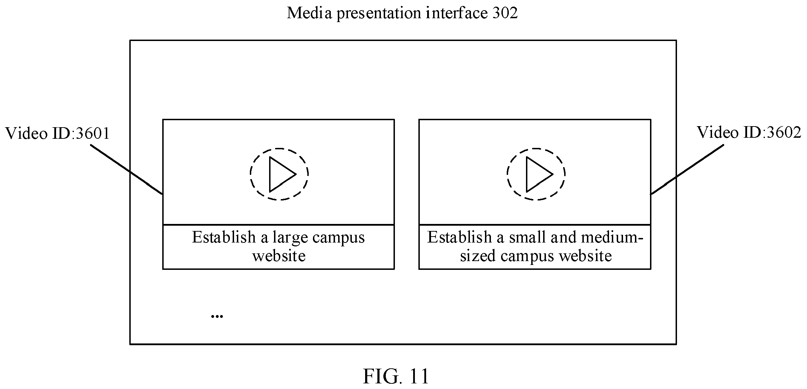

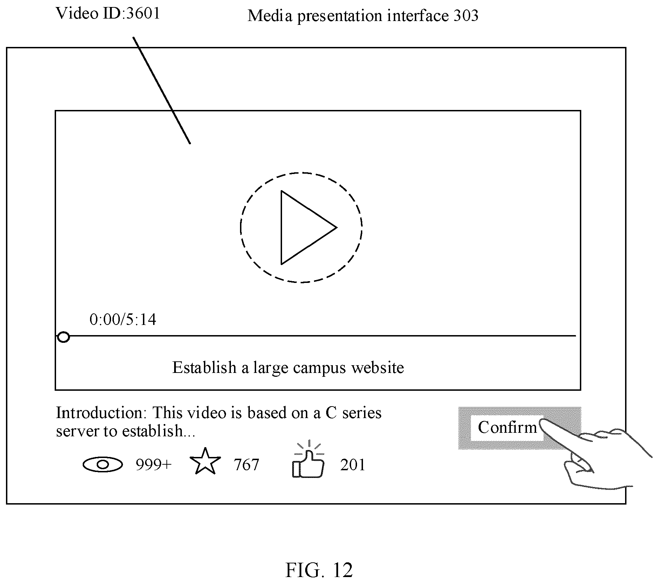

For example, the terminal presents the received video file on a media presentation interface 302 similar to that in FIG. 11. For example, two video files are presented on the interface 302, which are respectively "establishing a large campus website" and "establishing a teaching management system", and correspond to the two video files whose video file IDs are "3601" and "3602" that are obtained in step 203. The user browses the video files on the interface 302, and may further enter an introduction interface (for example, an interface 303 in FIG. 12) of a single video file to watch content of the video file or browse information related to the video file.

The interface 303 further includes a video file playing window component, a button component "Confirm" for confirming solution establishment, and may further include one or more types of information related to the video file and the solution thereof, such as a video file introduction, a quantity of browse times, a quantity of favorites times, a quantity of likes, a quantity of comments, and comment content (not shown in the figure). The video file can contain any content related to the solution, such as an application scenario, a basic function, a construction process, preview of finished products, an optional function, and a price that are of the solution.

Step 207: The user selects a target solution template on the terminal.

For example, the template is a video. After browsing the interface 302 and the interface 303, the user considers that content of the first video file "establishing a large campus website" most matches the requirement of the user, and selects to enter a detailed interface of the first video file, that is, the interface 303 in FIG. 12. Current content of the interface 303 is a video file whose title is "establishing a large campus website" (the video file ID is "3601") and that is selected by the user, and the video file is a target video file in this embodiment. After the user taps the "Confirm" button at the bottom of the interface 303, the terminal sends, to the server, an identifier corresponding to the target video selected by the user.

Step 208: The server receives an identifier of the target solution template.

The server receives a confirm request that is of the user and that is sent by the terminal for the target solution template, and the request includes the identifier of the target solution template. For example, following the example in step 207, the server receives the identifier of the target video file 3601.

Step 209: Obtain a target script.

After receiving the identifier of the target solution template, the server obtains the target script associated with the identifier, and the target script includes a default parameter. For example, the server obtains, based on the target video file 3601 selected by the user, the script J3601 associated with the target video file 3601.

Step 210: Update a default parameter based on the service request.

Optionally, after modifying the default parameter, the server sends the modified default parameter to the terminal. In a possible embodiment, the server obtains some optimized parameters by analyzing a service request of a user, and the some optimized parameters are referred to as service parameters. The server updates the default parameter based on the service parameter, and sends an updated parameter to the terminal. The parameter includes a product parameter and a topology parameter. For details, refer to the foregoing description.

Step 211: Send an updated parameter.

Optionally, the server obtains and sends the updated parameter based on the script corresponding to the target solution template, where the updated parameter includes the product parameter and the topology parameter.

For example, in the script J3601, parameters of various products of the solution in the video file 3601 and parameters (that is, topology parameters) of collaboration services between the products are preset. These preset information is collectively referred to as default parameters in this embodiment of this application, and these default parameters may support the server in deploying the solution.

In a possible implementation, the server directly sends the default parameter to the terminal.

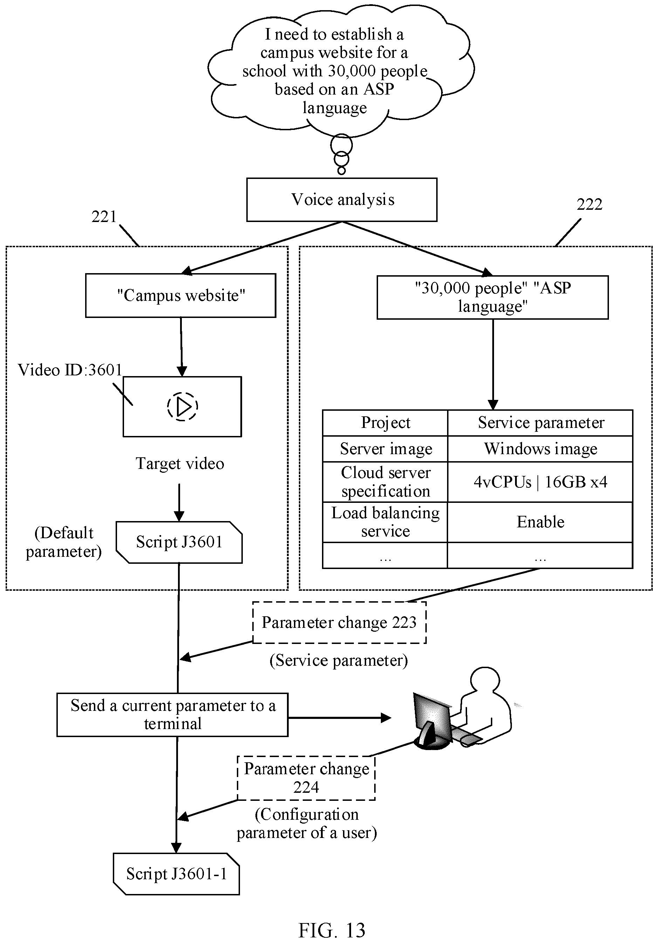

As shown in FIG. 13, a branch 221 on the left describes a process in which after a user inputs a requirement and performs voice analysis, a server returns a related video file by matching a keyword "campus website", and then obtains, based on the target video file selected by the user, a script J3601 with a default parameter. A branch 222 on the right describes a process in which after a user inputs a requirement and performs voice analysis, the server obtains some parameters (service parameters) after some configuration items are optimized by using important information such as "30,000" and "ASP language" obtained by analyzing the requirement input by the user and voice analysis.

For example (222 in FIG. 13), the server sets the optimization parameter of the server image to a windows image for the user based on the "ASP language" (because the Linux operating system does not support the ASP language, Windows is selected). The server optimizes the server specification (including the quantity) to four servers with 4 vCPUs and 16 GB based on the "30,000" for the user, and further sets the optimization parameter of the load balancing service to enabled (for example, based on an analysis result, it is found that the "30,000" users need to be configured with the service). In the figure, some service parameters are not completely shown.

It can be seen from FIG. 13 that, before sending the parameter to the user in this step, the server performs a parameter change 223 for the first time based on the service parameter, and then sends the changed current parameter to the terminal. Certainly, this step is optional.

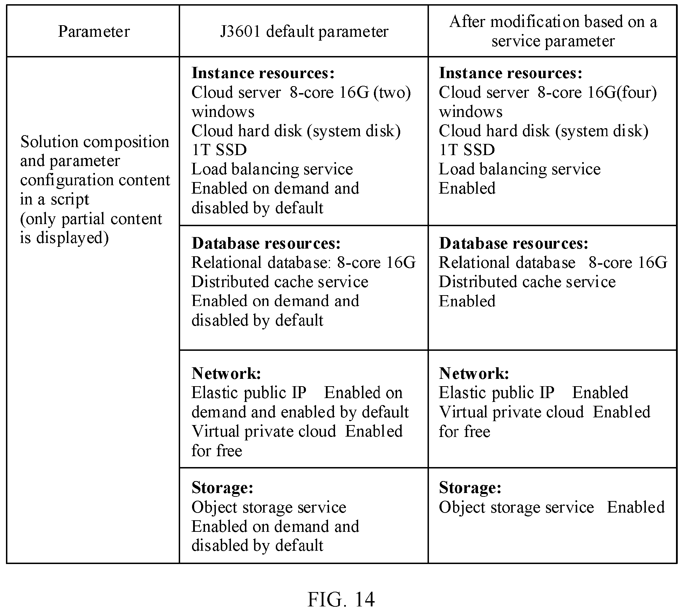

For example, for a comparison of a parameter change status before and after the parameter change 223 is performed by using the script J3601, refer to the table in FIG. 14. For example, a quantity of cloud servers is changed from 2 to 4, a server image is not changed (because a default parameter is consistent with a service parameter), and load balancing, distributed cache, and object storage are service parameters obtained based on analysis of the user requirement (the figure shows only service enabling, and does not show specific parameter details).

Step 212: Present a product parameter and a topology parameter.

For example, in an implementation, the terminal presents at least one of a topology relationship and product configuration information to the user based on the received topology parameter and the received product parameter.

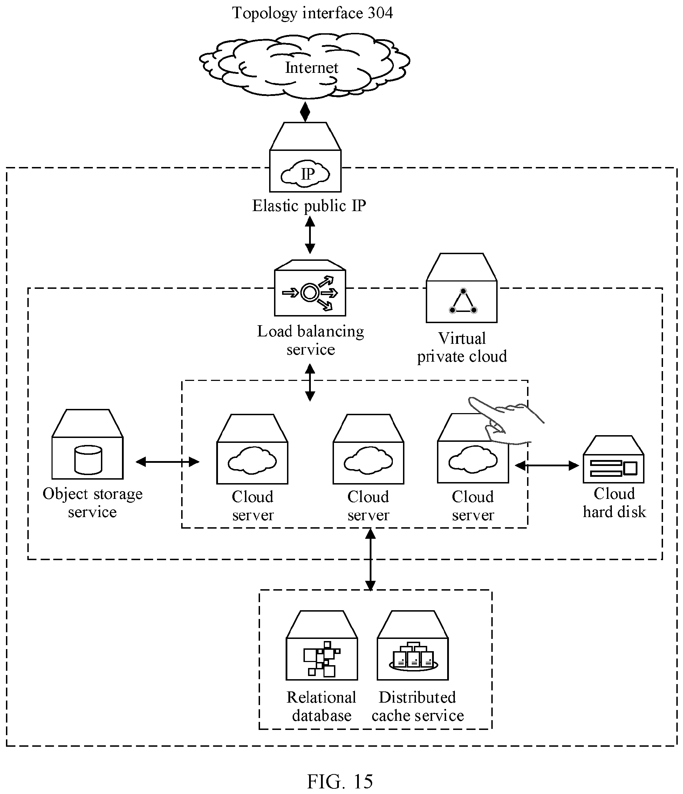

An interface 304 in FIG. 15 is an example of a topology information interface according to an embodiment of this application. The interface includes: a quantity of existing products, products that exist, and a connection relationship between the products, and parameter settings that are not shown but that may exist and that are used to deploy an association relationship between the products, for example, a parameter related to network communication between two cloud servers. Optionally, the interface 304 may further include an association relationship between the product and the Internet. Optionally, after clicking a product visual component on the interface, the user can further view the product parameter. The user can also adjust a product connection relationship in the topology view and a quantity of products. Optionally, the interface 304 may further include a confirmation component "Buy Now" and price information in 305.

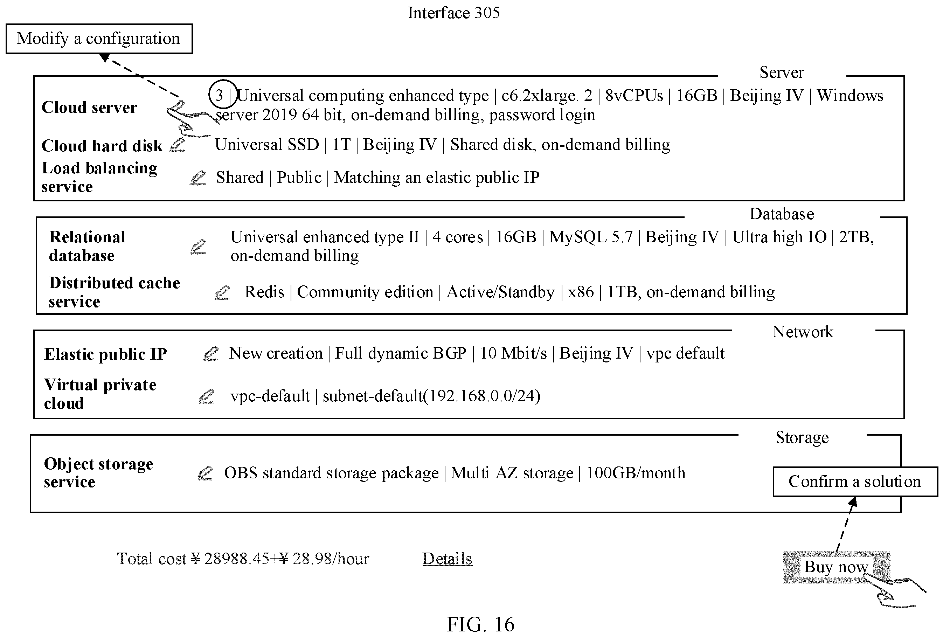

A user interface 305 in FIG. 16 is an example of an interface according to an embodiment of this application. The interface includes various product parameters involved in a solution, a button component "Buy Now" for confirming purchase of all products on a current interface, a button component for viewing specific configuration and modifying parameters, a fee status, and the like. The user can browse and modify detailed parameter content of each product. Optionally, in addition to a product parameter of a single product, the interface 305 may further include product quantity information (because the product quantity information is related to price calculation, the product quantity information may be presented on the interface 305).

Step 213: The user edits the parameter on the terminal.

The user may modify a parameter of the current solution based on a personal requirement. For example, on the interface 305 in FIG. 15, the user modifies a quantity of cloud servers to 3 (which may further include other modifications, which are not completely shown in the figure). The parameter edited by the user is referred to as a configuration parameter.

Step 214: The server receives a configuration parameter of the user.

In a possible implementation, the server receives, in real time, the modified configuration parameter of the user, and delivers updated price information to the terminal in time.

In a possible implementation, after the server receives that the user completes modification (for example, clicks a "Complete" button, which is not shown), the server receives the modified configuration parameter of the user, and returns the current price information.

Step 215: The user performs confirmation.

In a possible real-time manner, after completing modification of the configuration parameter, the user needs to confirm a solution (including a price, a parameter, and the like) on the current interface, that is, send a confirmation instruction to the server. For example, after completing the modification, the user may click a button "Buy Now" on the interface 304, and the terminal sends a response confirmation instruction to the server.

Step 216: Receive a confirmation instruction.

After the user confirms the solution, the server establishes the final solution based on the updated parameter and the script thereof in the foregoing steps.

For example, in a scenario, as shown in FIG. 13, the finally obtained script J3601-1 is a script used to establish the final solution. It can be seen that a maximum of two parameter changes (223 and 224) may be performed from the script J3601 with the default parameter to the final script J3601-1. The first time is a service parameter obtained by the server by analyzing a user requirement, and the second time is a configuration parameter modified by the user. Both the two changes are optional for this embodiment of the application.

Step 217: The server establishes a solution.

For example, it is assumed that FIG. 15 is a topology relationship diagram modified and determined by the user, the topology relationship diagram is a cloud finally established based on the script J3601-1. For the topology schematic diagram of the solution, the solution includes a cloud server, a cloud hard disk, a load balancing service, a relational database, a distributed cache service, an elastic public IP, a virtual private cloud, and an object storage service. This solution is based on the solution in the video file 3601 and is finally obtained after the parameter change 223 and the parameter change 224. Take a change of a quantity of cloud servers as an example. In the table in FIG. 14, the default parameter of the server in the original script 3601 is two. The system optimizes the parameter to four (the script 3601-1) by analyzing the user requirement (a service scenario of "30,000 users"), and the user modifies the server to three (in step 213) based on a self-consideration (for example, considering costs). Therefore, there are three servers in the finally established solution.

In this embodiment of this application, the method performed by the server in step 201 to step 216 in FIG. 8 may be completed by one server, or may be jointly completed by a plurality of servers from the cloud computing platform 101.

In this embodiment of this application, no limitation is imposed on locations, shapes, layouts, and text/pattern representations on various components of the user interface, and no limitation is imposed on triggering manners (for example, a single click or a long press) of the components, and only functions and effects of the components are described.

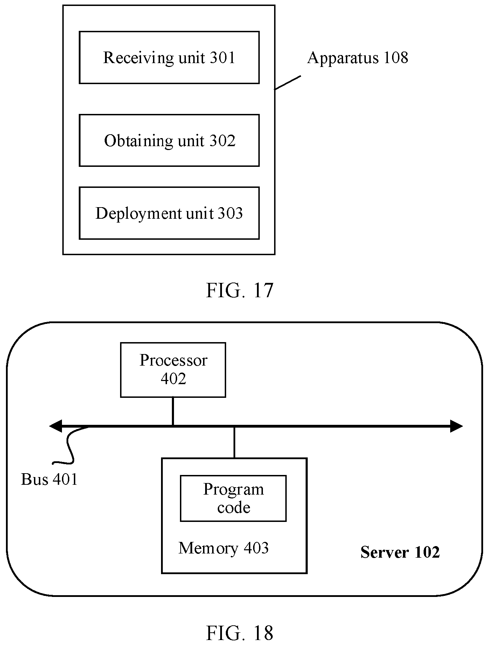

FIG. 17 is a schematic diagram of an example of an apparatus 108 according to an embodiment of this application. The apparatus 108 may include: a receiving unit 301, an obtaining unit 302, and a deployment unit 303.

The receiving module 301 is configured to receive a service request sent by a terminal.

Optionally, the receiving module 301 may further obtain the service request of the user based on voice data sent by the terminal.

The obtaining module 302 is configured to determine, through keyword matching, that a target solution is a solution satisfying the service request, and obtain a script of the target solution, where
the script includes a plurality of default parameters for configuring the target solution. Further, a plurality of default parameters include: a topology parameter, used to configure the plurality of products included in the solution; and a product parameter, used to configure the plurality of products included in the solution.

Optionally, the obtaining module 302 may further send one or more alternative solution templates matching the service request to the terminal, and receive an identifier of a target solution template selected by the terminal, where the target solution template is used to describe the target solution, and the one or more alternative solution templates include the target solution template; and obtain a script associated with the target solution template. Different alternative solution templates are used to describe different solutions.

Optionally, the alternative solution template is a video file or a solution document.

Optionally, the obtaining module 302 obtains one or more solution templates by matching a keyword of the service request with a keyword of the solution template. The solution template herein is the alternative solution template in this embodiment of this application.

Optionally, the obtaining module 302 is configured to determine a solution matching the keyword of the service request of the user as the target solution.

The deployment module 303 is configured to deploy, on a cloud computing platform, the target solution for the user by using the script.

Optionally, the deployment module 303 is further configured to: before deploying, on the cloud computing platform, the target solution for the user by using the script, generate, based on the service request, one or more service parameters used to configure the target solution, and update a corresponding default parameter in the script by using the generated service parameter.

Optionally, the deployment module 303 is further configured to: before deploying, on the cloud computing platform, the target solution for the user by using the script, send a configuration of the target solution included in the script to a terminal; and receive an acknowledgment for the configuration from the terminal.

Optionally, the deployment module 303 is further configured to send, to the terminal, a guide video or a guide document for using the target solution, to instruct how to use the deployed target solution.

Optionally, the deployment module 303 is further configured to: before deploying, on the cloud computing platform, the target solution for the user by using the script, send a configuration of the target solution included in the script to a terminal; receive a modified configuration parameter sent by the terminal; and update a corresponding service parameter or a corresponding default parameter in the script by using the modified configuration parameter.

FIG. 18 is a schematic diagram of an example of a structure of a server 102. A computing device 102 in the figure includes a bus 401, a processor 402, and a memory 403. The processor 402 and the memory 403 communicate with each other by using the bus 401.

The bus 401 may be a peripheral component interconnect bus, an extended industry standard structure bus, or the like.

The processor 402 may be a central processing unit (Central Processing Unit, CPU). In addition, the processor 402 may further include one or more of a graphics processing unit (graphics processing unit, GPU), a neural network processor (Neural network Processing Unit, NPU), or an FPGA (Field Programmable Gate Array).

The memory 403 may include one or more of a random access memory (random access memory, RAM), a read-only memory (read-only memory, ROM), a flash memory, a hard disk drive (hard disk drive, HDD), or a solid state drive (solid state drive, SSD). The memory 403 stores executable program code, and the processor 402 executes the executable program code to implement a function of the server 102.

## Claims

1. A method for deploying a solution, wherein the method comprises:
receiving (202) a service request of a user;
obtaining (209) a script of a target solution, wherein the target solution refers to a product combination that is built to support an industry scenario or a service scenario, the target solution comprises a plurality of products, and a combination of the plurality of products satisfies the service request, the plurality of products are provided by a cloud computing platform, the script comprises a plurality of default parameters for configuring the target solution, the plurality of default parameters comprise:
a topology parameter, used to configure the plurality of products comprised in the target solution; and
a product parameter, used to configure the plurality of products comprised in the target solution, wherein the product parameter is a product configuration and the topology parameter includes a quantity of products and a product association relationship, the product association relationship refers to a relationship between a data flow ingress and a data flow egress of two or more products; and
deploying (217), on the cloud computing platform, the target solution for the user by using the script.

2. The method according to claim 1, wherein before the deploying, on a cloud computing platform, the target solution for the user by using the script, the method further comprises:
generating (210), based on the service request, one or more service parameters used to configure the target solution; and
updating a corresponding default parameter in the script by using the generated service parameter.

3. The method according to any one of claims 1 to 2, wherein before the deploying, on a cloud computing platform, the target solution for the user by using the script, the method further comprises:
sending a configuration of the target solution comprised in the script to a terminal; and
receiving an acknowledgment for the configuration from the terminal.

4. The method according to any one of claims 1 to 2, wherein before the deploying, on a cloud computing platform, the target solution for the user by using the script, the method further comprises:
sending a configuration of the target solution comprised in the script to a terminal;
receiving a modified configuration parameter sent by the terminal; and
updating a corresponding service parameter or a corresponding default parameter in the script by using the modified configuration parameter.

5. The method according to any one of claims 1 to 4, wherein the method further comprises:
determining a solution matching a keyword of the service request as the target solution.

6. The method according to any one of claims 1 to 5, wherein
before the obtaining a script of a target solution, the method further comprises: sending (205) one or more alternative solution templates matching the service request to the terminal, and receiving (208) an identifier of a target solution template selected by the terminal, wherein the target solution template is used to describe the target solution, and the one or more alternative solution templates comprise the target solution template; and
the obtaining a script of a target solution is specifically: obtaining a script associated with the target solution template.

7. The method according to claim 6, wherein the method further comprises:
obtaining a matched solution template when the keyword of the service request matches a keyword of the solution template, wherein the matched solution template is the alternative solution template.

8. The method according to claim 6 or 7, wherein different alternative solution templates in the plurality of alternative solution templates are used to describe different solutions.

9. The method according to any one of claims 6 to 8, wherein the alternative solution template is a video file or a solution document.

10. The method according to any one of claims 1 to 9, wherein the receiving a service request of a user comprises:
receiving voice sent by the terminal; and
obtaining the service request of the user by using the voice.

11. The method according to any one of claims 1 to 10, wherein the method further comprises:
sending a guide video or a guide document for using the target solution to the terminal.

12. An apparatus for deploying a solution, wherein the apparatus comprises:
a receiving module (301), configured to receive a service request of a user;
an obtaining module (302), configured to obtain a script of a target solution, wherein the target solution refers to a product combination that is built to support an industry scenario or a service scenario, the target solution comprises a plurality of products, and a combination of the plurality of products satisfies the service request, the plurality of products are provided by a cloud computing platform, the script comprises a plurality of default parameters for configuring the target solution, the plurality of default parameters comprise:
a topology parameter, used to configure the plurality of products comprised in the target solution; and
a product parameter, used to configure the plurality of products comprised in the target solution, wherein the product parameter is a product configuration and the topology parameter includes a quantity of products and a product association relationship, the product association relationship refers to a relationship between a data flow ingress and a data flow egress of two or more products; and
a deployment module (303), configured to deploy, on the cloud computing platform, the target solution for the user by using the script.

## Patentansprüche

1. Verfahren zum Bereitstellen einer Lösung, wobei das Verfahren umfasst:
Empfangen (202) einer Dienstanforderung eines Benutzers;
Erhalten (209) eines Skripts einer Ziellösung, wobei sich die Ziellösung auf eine Produktkombination bezieht, die hergestellt wird, um ein Industrieszenario oder ein Dienstszenario zu unterstützen, die Ziellösung eine Vielzahl von Produkten umfasst und eine Kombination der Vielzahl von Produkten die Dienstanforderung erfüllt, die Vielzahl von Produkten durch eine "Cloud Computing"-Plattform bereitgestellt wird, das Skript eine Vielzahl von Standardparametern zum Konfigurieren der Ziellösung umfasst, die Vielzahl von Standardparametern umfasst:
einen Topologieparameter, der zum Konfigurieren der Vielzahl von in der Ziellösung enthaltenen Produkten verwendet wird; und
einen Produktparameter, der zum Konfigurieren der Vielzahl von in der Ziellösung enthaltenen Produkten verwendet wird, wobei der Produktparameter eine Produktkonfiguration ist und der Topologieparameter eine Menge von Produkten und eine Produktzuordnungsbeziehung einschließt, wobei sich die Produktzuordnungsbeziehung auf eine Beziehung zwischen einem Datenflusseingang und einem Datenflussausgang von zwei oder mehreren Produkten bezieht; und
Bereitstellen (217), auf der "Cloud Computing"-Plattform, der Ziellösung für den Benutzer durch Verwenden des Skripts.

2. Verfahren nach Anspruch 1, wobei, vor dem Bereitstellen, auf einer "Cloud Computing"-Plattform, der Ziellösung für den Benutzer durch Verwenden des Skripts, das Verfahren ferner umfasst:
Erzeugen (210), basierend auf der Dienstanforderung, eines oder mehrerer Dienstparameter(s), der/die zum Konfigurieren der Ziellösung verwendet wird/werden; und
Aktualisieren eines entsprechenden Standardparameters im Skript durch Verwenden des erzeugten Dienstparameters.

3. Verfahren nach einem der Ansprüche 1 bis 2, wobei, vor dem Bereitstellen, auf einer "Cloud Computing"-Plattform, der Ziellösung für den Benutzer durch Verwenden des Skripts, das Verfahren ferner umfasst:
Senden einer Konfiguration der im Skript enthaltenen Ziellösung an ein Endgerät und
Empfangen einer Bestätigung für die Konfiguration vom Endgerät.

4. Verfahren nach einem der Ansprüche 1 bis 2, wobei, vor dem Bereitstellen, auf einer "Cloud Computing"-Plattform, der Ziellösung für den Benutzer durch Verwenden des Skripts, das Verfahren ferner umfasst:
Senden einer Konfiguration der im Skript enthaltenen Ziellösung an ein Endgerät;
Empfangen eines modifizierten Konfigurationsparameters, der durch das Endgerät gesendet wird; und
Aktualisieren eines entsprechenden Dienstparameters oder eines entsprechenden Standardparameters im Skript durch Verwenden des modifizierten Konfigurationsparameters.

5. Verfahren nach einem der Ansprüche 1 bis 4, wobei das Verfahren ferner umfasst: Bestimmen einer Lösung, die mit einem Schlüsselwort der Dienstanforderung übereinstimmt, als die Ziellösung.

6. Verfahren nach einem der Ansprüche 1 bis 5, wobei
vor dem Erhalten eines Skripts einer Ziellösung, das Verfahren ferner umfasst: Senden (205) einer alternativen oder mehrerer alternativer Lösungsvorlage(n), die mit der Dienstanforderung übereinstimmt/übereinstimmen, an das Endgerät und Empfangen (208) eines Identifikators einer Ziellösungsvorlage, die durch das Endgerät ausgewählt wird, wobei die Ziellösungsvorlage zum Beschreiben der Ziellösung verwendet wird und die eine oder die mehreren alternative(n) Lösungsvorlage(n) die Ziellösungsvorlage umfasst/umfassen; und
das Erhalten eines Skripts einer Ziellösung insbesondere ist: Erhalten eines Skripts, das der Ziellösungsvorlage zugeordnet ist.

7. Verfahren nach Anspruch 6, wobei das Verfahren ferner umfasst:
Erhalten einer übereinstimmenden Lösungsvorlage, wenn das Schlüsselwort der Dienstanforderung mit einem Schlüsselwort der Lösungsvorlage übereinstimmt, wobei die übereinstimmende Lösungsvorlage die alternative Lösungsvorlage ist.

8. Verfahren nach Anspruch 6 oder 7, wobei verschiedene alternative Lösungsvorlagen in der Vielzahl von alternativen Lösungsvorlagen zum Beschreiben verschiedener Lösungen verwendet werden.

9. Verfahren nach einem der Ansprüche 6 bis 8, wobei die alternative Lösungsvorlage eine Videodatei oder ein Lösungsdokument ist.

10. Verfahren nach einem der Ansprüche 1 bis 9, wobei das Empfangen einer Dienstanforderung eines Benutzers umfasst:
Empfangen von Sprache, die durch das Endgerät gesendet wird; und
Erhalten der Dienstanforderung des Benutzers durch Verwenden der Sprache.

11. Verfahren nach einem der Ansprüche 1 bis 10, wobei das Verfahren ferner umfasst: Senden eines Anleitungsvideos oder eines Anleitungsdokuments zum Verwenden der Ziellösung an das Endgerät.

12. Vorrichtung zum Bereitstellen einer Lösung, wobei die Vorrichtung umfasst:
ein Empfangsmodul (301), das ausgelegt ist zum Empfangen einer Dienstanforderung eines Benutzers;
ein Erhaltungsmodul (302), das ausgelegt ist zum Erhalten eines Skripts einer Ziellösung, wobei sich die Ziellösung auf eine Produktkombination bezieht, die hergestellt wird, um ein Industrieszenario oder ein Dienstszenario zu unterstützen, die Ziellösung eine Vielzahl von Produkten umfasst und eine Kombination der Vielzahl von Produkten die Dienstanforderung erfüllt, die Vielzahl von Produkten durch eine "Cloud Computing"-Plattform bereitgestellt wird, das Skript eine Vielzahl von Standardparametern zum Konfigurieren der Ziellösung umfasst, die Vielzahl von Standardparametern umfasst:
einen Topologieparameter, der zum Konfigurieren der Vielzahl von in der Ziellösung enthaltenen Produkten verwendet wird; und
einen Produktparameter, der zum Konfigurieren der Vielzahl von in der Ziellösung enthaltenen Produkten verwendet wird, wobei der Produktparameter eine Produktkonfiguration ist und der Topologieparameter eine Menge von Produkten und eine Produktzuordnungsbeziehung einschließt, wobei sich die Produktzuordnungsbeziehung auf eine Beziehung zwischen einem Datenflusseingang und einem Datenflussausgang von zwei oder mehreren Produkten bezieht; und
ein Bereitstellungsmodul (303), das ausgelegt ist zum Bereitstellen, auf der "Cloud Computing"-Plattform, der Ziellösung für den Benutzer durch Verwenden des Skripts.

## Revendications

1. Procédé de déploiement d'une solution, dans lequel le procédé comprend :
la réception (202) d'une demande de service d'un utilisateur ;
l'obtention (209) d'un script d'une solution cible, dans lequel la solution cible se réfère à une combinaison de produits qui est élaborée pour soutenir un scénario industriel ou un scénario de service, la solution cible comprend une pluralité de produits, et une combinaison de la pluralité de produits satisfait la demande de service, la pluralité de produits sont fournis par une plateforme informatique en nuage, le script comprend une pluralité de paramètres par défaut pour configurer la solution cible, la pluralité de paramètres par défaut comprend :
un paramètre de topologie, utilisé pour configurer la pluralité de produits compris dans la solution cible ; et
un paramètre de produit, utilisé pour configurer la pluralité de produits compris dans la solution cible, dans lequel le paramètre de produit est une configuration de produit et le paramètre de topologie comprend une quantité de produits et une relation d'association de produits, la relation d'association de produits se réfère à une relation entre une entrée de flux de données et une sortie de flux de données d'au moins deux produits ; et
le déploiement (217), sur la plateforme informatique en nuage, de la solution cible pour l'utilisateur au moyen du script.

2. Procédé selon la revendication 1, dans lequel avant le déploiement, sur une plateforme informatique en nuage, de la solution cible pour l'utilisateur au moyen du script, le procédé comprend en outre :
la génération (210), sur la base de la demande de service, d'un ou de plusieurs paramètres de service utilisés pour configurer la solution cible ; et
la mise à jour d'un paramètre par défaut correspondant dans le script au moyen du paramètre de service généré.

3. Procédé selon l'une quelconque des revendications 1 et 2, dans lequel avant le déploiement, sur une plateforme informatique en nuage, de la solution cible pour l'utilisateur au moyen du script, le procédé comprend en outre :
l'envoi d'une configuration de la solution cible comprise dans le script à un terminal ; et
la réception d'un accusé de réception pour la configuration depuis le terminal.

4. Procédé selon l'une quelconque des revendications 1 et 2, dans lequel avant le déploiement, sur une plateforme informatique en nuage, de la solution cible pour l'utilisateur au moyen du script, le procédé comprend en outre :
l'envoi d'une configuration de la solution cible comprise dans le script à un terminal ;
la réception d'un paramètre de configuration modifié envoyé par le terminal ; et
la mise à jour d'un paramètre de service correspondant ou d'un paramètre par défaut correspondant dans le script au moyen du paramètre de configuration modifié.

5. Procédé selon l'une quelconque des revendications 1 à 4, dans lequel le procédé comprend en outre :
la détermination d'une solution correspondant à un mot-clé de la demande de service en tant que solution cible.

6. Procédé selon l'une quelconque des revendications 1 à 5, dans lequel avant l'obtention d'un script d'une solution cible, le procédé comprend en outre :
l'envoi (205) d'un ou de plusieurs modèles de solution alternatifs correspondant à la demande de service au terminal, et la réception (208) d'un identifiant d'un modèle de solution cible sélectionné par le terminal, dans lequel le modèle de solution cible est utilisé pour décrire la solution cible, et le ou les modèles de solution alternatifs comprennent le modèle de solution cible ; et
l'obtention d'un script d'une solution cible consiste spécifiquement en : l'obtention d'un script associé au modèle de solution cible.

7. Procédé selon la revendication 6, dans lequel le procédé comprend en outre :
l'obtention d'un modèle de solution correspondant lorsque le mot-clé de la demande de service correspond à un mot-clé du modèle de solution, dans lequel le modèle de solution correspondant est le modèle de solution alternatif.

8. Procédé selon la revendication 6 ou 7, dans lequel différents modèles de solution alternatifs parmi la pluralité de modèles de solution alternatifs sont utilisés pour décrire différentes solutions.

9. Procédé selon l'une quelconque des revendications 6 à 8, dans lequel le modèle de solution alternatif est un fichier vidéo ou un document de solution.

10. Procédé selon l'une quelconque des revendications 1 à 9, dans lequel la réception d'une demande de service d'un utilisateur comprend :
la réception d'un message vocal envoyé par le terminal ; et
l'obtention de la demande de service de l'utilisateur au moyen de la voix.

11. Procédé selon l'une quelconque des revendications 1 à 10, dans lequel le procédé comprend en outre :
l'envoi d'un guide vidéo ou d'un document guide pour l'utilisation de la solution cible au terminal.

12. Appareil de déploiement d'une solution, dans lequel l'appareil comprend :
un module de réception (301), configuré pour recevoir une demande de service d'un utilisateur ;
un module d'obtention (302), configuré pour obtenir un script d'une solution cible, dans lequel la solution cible se réfère à une combinaison de produits qui est élaborée pour soutenir un scénario industriel ou un scénario de service, la solution cible comprend une pluralité de produits, et une combinaison de la pluralité de produits satisfait la demande de service, la pluralité de produits sont fournis par une plateforme informatique en nuage, le script comprend une pluralité de paramètres par défaut pour configurer la solution cible, la pluralité de paramètres par défaut comprend :
un paramètre de topologie, utilisé pour configurer la pluralité de produits compris dans la solution cible ; et
un paramètre de produit, utilisé pour configurer la pluralité de produits compris dans la solution cible, dans lequel le paramètre de produit est une configuration de produit et le paramètre de topologie comprend une quantité de produits et une relation d'association de produits, la relation d'association de produits se réfère à une relation entre une entrée de flux de données et une sortie de flux de données d'au moins deux produits ; et
un module de déploiement (303), configuré pour déployer, sur la plateforme informatique en nuage, la solution cible pour l'utilisateur au moyen du script.
